Europäisches Patentamt

(19) European Patent Office

Office européen des brevets

(11) Numéro de publication : **0 128 963**
**B1**

(12) **FASCICULE DE BREVET EUROPÉEN**

(45) Date de publication du fascicule du brevet :
09.09.87

(21) Numéro de dépôt : 83105777.3

(22) Date de dépôt : 13.06.83

(51) Int. Cl.⁴ : **A 01 J 27/04, A 23 C 19/09,**
**A 23 C 19/08, A 23 G   9/28,**
**A 23 G   3/20**

(54) **Procédé et installation de fabrication de portions alimentaires multicouches.**

(43) Date de publication de la demande :
27.12.84 Bulletin 84/52

(45) Mention de la délivrance du brevet :
09.09.87 Bulletin 87/37

(84) Etats contractants désignés :
CH DE FR GB IT LI NL

(56) Documents cités :
CH-A-   538 814
DE-A- 2 537 956
FR-A- 2 310 084
US-A- 2 010 524
US-A- 3 991 217

(73) Titulaire : **SOCIETE DES PRODUITS NESTLE S.A.**
**Case postale 353**
**CH-1800 Vevey (CH)**

(72) Inventeur : **Invernizzi, Rutilio**
**Via Plinio 63**
**Milan (IT)**
Inventeur : **Montesissa, Giancarlo**
**Via Magenta No. 1**
**Robbio (IT)**

## Description

La présente invention concerne une installation de fabrication de portions alimentaires multicouches de produits pâteux et un procédé de mise en œuvre.

On fabrique habituellement les portions de produits alimentaires pâteux tels que par exemple les fromages fondus crémeux en coulant des doses de pâte à chaud à partir d'un bec dans des coquilles de forme voulue dont les bords sont relevés, en appliquant un couvercle, en repliant et en fixant les bords et en évacuant les portions emballées. Il est difficile de doser exactement les portions et on renonce à les former préalablement au moulage du fait de leur nature visqueuse et collante. Le problème se complique si on désire les présenter sous forme de couches distinctes en associant des pâtes bien différenciées sur le plan visuel et organoleptique mais complémentaires entre elles, de manière à donner aux portions un aspect stratifié contrasté et à produire une amélioration notable des sensations organoleptiques par rapport aux mêmes produits prémélangés dans la portion.

Selon le brevet CH-538 814 et la demande de brevet publiée FR-2 310 084, par exemple, on procure un aspect marbré aux portions de fromage fondu par injection d'additifs ou d'une seconde pâte aromatisée et colorée différemment dans le courant d'une première pâte en amont du bec de déversement du produit dans les coquilles. Ces procédés ne conduisent pas aux portions stratifiées recherchées.

Une autre méthode décrite dans la demande de brevet publiée FR-2 475 361 prévoit la transformation de rétentats d'ultrafiltration du lait préempresurés en fromages multicouches par moulage successif de chaque couche liquide sur la précédente déjà coagulée ou par mélange de rétentats de densité différente se séparant par gravité dans les moules et coagulation ultérieure. Cette technique n'est réalisable que pour les fromages frais et ne produit par ailleurs que des couches disposées horizontalement, l'aspect stratifié n'étant pas immédiatement visible dès l'ouverture de l'emballage.

Un autre procédé illustré dans le brevet des Etats-Unis 3 359 925 permet de fabriquer des blocs de crème glacée bi-parfum se présentant sous forme de damier, cependant que selon le brevet des Etats-Unis 3 991 217, on remplit des pots de plusieurs couches de crème glacée de parfums différents disposées en tranches verticales. Selon ces brevets, on transfère au moins deux crèmes glacées de parfum différent dans une chambre de formage comprenant plusieurs compartiments séparés par des parois minces dans lesquels on forme les couches séparément les unes à côté des autres et on les extrude simultanément dans un récipient d'emballage au moyen de poussoirs. Ces procédés ne permettraient pas de doser et de former les portions multicouches désirées à partir de produits pâteux et en particulier de fromages fondus car ils colleraient très rapidement aux poussoirs.

La présente installation résout le problème de la fabrication de portions multicouches de produit pâteux tel que par exemple du fromage fondu. Elle comprend essentiellement un poste de formage constitué d'une chambre de formage comprenant plusieurs compartiments séparés par des parois d'expulsion simultanée des différentes couches constituant la portion, chaque élément d'expulsion coulissant entre les parois d'un compartiment s'appliquant individuellement sur la couche qui lui correspond pour l'expulser de la chambre de formage par un bec prolongeant celle-ci vers le bas de manière à placer cette couche avec les autres déplacées simultanément dans une coquille préformée disposée dessous et destinée à recevoir la portion ainsi formée. Elle est caractérisée par le fait que le fond de la chambre de formage est constitué de deux groupes en vis-à-vis d'éléments en forme de marteaux, dont l'extrémité effilée s'étend vers le bas jusqu'aux environs de l'extrémité inférieure du bec de coulée, chaque groupe d'éléments pouvant coulisser latéralement en sens opposé à l'autre groupe de façon à ouvrir ou fermer le fond de la chambre de formage à sa jonction avec le bec de coulée, chaque élément-marteau coulissant entre les parois d'un compartiment, qui se prolongent dans le bec de coulée, que des moyens sont prévus pour déplacer relativement entre eux la coquille préformée et la chambre de formage avec le bec verticalement entre une position où le fond de la coquille est légèrement en dessous de l'extrémité du bec et une autre position où la coquille peut être dégagée du bec et évacuée latéralement, et que l'extrémité inférieure des éléments d'expulsion est sensiblement au niveau de l'extrémité inférieure du bec de coulée, à la fin du mouvement d'expulsion.

Dans une réalisation particulière d'une portion emballée, par exemple de fromage fondu, le procédé comprend en plus des opérations de dosage et de formage, l'application d'un tirecel pour ouverture facile, la préparation d'une coquille préalablement au dosage et postérieurement à celui-ci l'application d'un couvercle, le repliage et la fixation des bords ainsi que l'évacuation des portions emballées.

L'invention concerne également un procédé de fabrication de portions alimentaires multicouches de produits pâteux de nature différente, caractérisé par les étapes suivantes effectuées avec l'installation selon l'invention : on place le fond de la coquille légèrement au-dessous de l'extrémité du bec et on ouvre le fond amovible de la chambre de formage en faisant coulisser latéralement les deux ensembles d'éléments qui le constituent, on expulse les couches de pâtes formées en faisant descendre progressivement et simultanément les éléments d'expulsion jusqu'à ce que leur extrémité inférieure soit sensiblement au niveau de l'extrémité inférieure du bec tandis que de manière concomitante la coquille descend ou que la chambre de formage remonte, la coquille demeurant fixe dans ce dernier cas, de manière que, dans l'un ou l'autre cas, le bord supérieur de la coquille soit légèrement au-dessus de l'extrémité du bec, on fait remonter les éléments d'expulsion jusqu'à ce que leur extrémité inférieure soit légèrement au-dessus des éléments constitutifs du fond de la chambre de formage cependant qu'on maintient la coquille fixe, on referme les éléments constitutifs du fond de la chambre de formage ce qui expulse pratiquement les résidus de pâte et on fait remonter les éléments d'expulsion de manière à remplir la chambre de formage de nouvelles doses de produit correspondant à la portion suivante cependant qu'on fait descendre la coquille remplie jusqu'à un niveau où elle est évacuée vers un poste de traitement ultérieur.

Selon une forme d'exécution particulière dans laquelle on désire emballer les portions, par exemple lorsqu'il s'agit de fromage fondu, l'installation comporte en plus des postes d'application d'un tirecel pour ouverture et d'emboutissage d'une coquille en amont du poste de dosage et des postes d'application d'un couvercle, de repliage des bords, de fixation des bords et d'évacuation de la portion emballée en aval.

Le dessin annexé montre, à titre d'exemple, une forme d'exécution de l'invention.

La figure 1 représente une vue schématique de l'ensemble d'une installation de fabrication de portions multicouches.

La figure 2a est une vue de côté avec coupe longitudinale partielle plus détaillée du poste de formage.

La figure 2b est une vue de dessous du groupe de formage.

La figure 3 illustre une forme d'exécution du dispositif de transport des coquilles d'un poste à l'autre de l'installation montrant une coupe détaillée de l'alvéole de transport.

La figure 4 est une coupe partielle d'une forme d'exécution du dispositif de transport des coquilles.

La figure 5 illustre schématiquement les séquences de formage et de transfert de la portion dans la coquille et

La figure 6 montre une vue en perspective d'une portion avec l'emballage ouvert laissant apparaître la structure « zébrée » de la portion.

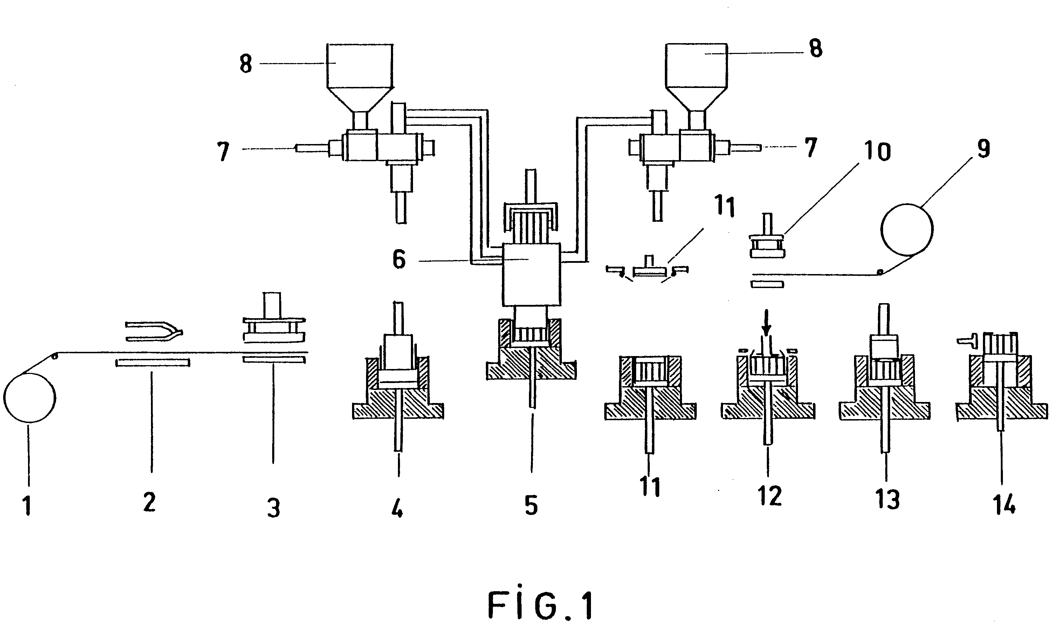

A la figure 1, le film à coquille qui peut être par exemple en matériau plastique composite ou de préférence en aluminium se déroule de la bobine 1 jusqu'au poste d'application des tirecels pour ouverture facile 2. Au poste 3, on découpe la coquille à la forme voulue. En 4 on forme la coquille par emboutissage (ou thermoformage dans le cas d'un film en matériau plastique, auquel cas cette opération a lieu de préférence avant le découpage) et on la pose au fond d'un alvéole porté par une chaîne transporteuse ou de préférence une table tournante non représentée, avançant de manière cadencée et dont la fonction est de transférer l'alvéole d'un poste à l'autre. Au poste 5, on lève la coquille maintenue dans l'alvéole jusqu'au groupe de formage et d'expulsion 6 dont elle reçoit les couches qui entretemps ont été formées. Les pâtes qui composent les couches proviennent de deux groupes de doseurs multiples 7 reliés à deux trémies d'alimentation 8. Le film, par exemple d'aluminium pour la préparation du couvercle, se déroule de la bobine 9 vers la station de découpage 10. Dans la phase suivante 11, on pose le couvercle sur la portion et on ferme la coquille qui est encore retenue dans son alvéole. Aux postes suivants on replie les bords de la coquille sur le couvercle 12 et on les fixe par exemple par thermosoudage par une presse chauffée 13. Le poste 14 correspond à l'expulsion de la portion emballée de l'alvéole et à sa décharge de la chaîne ou de la table de transport.

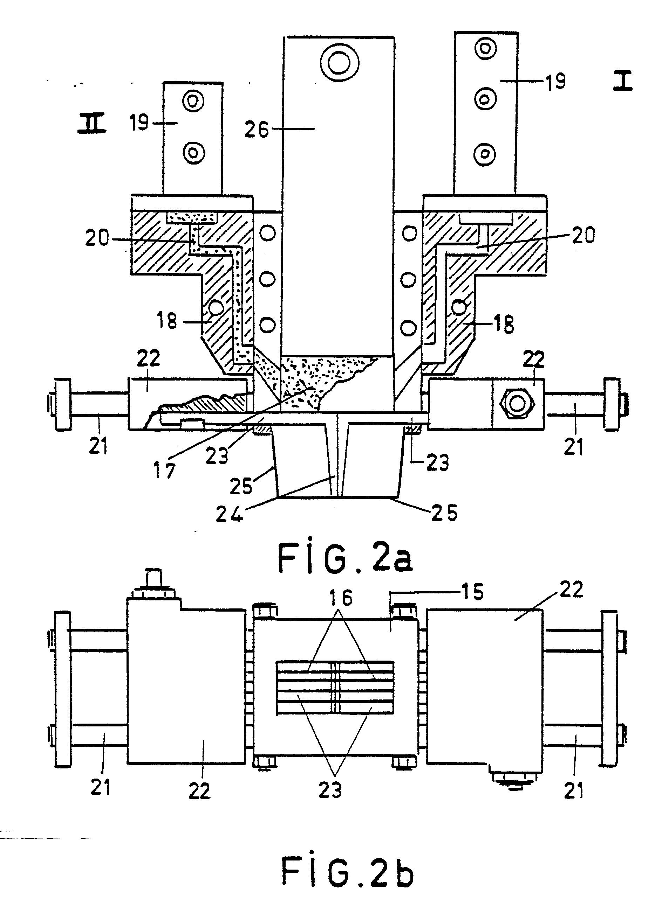

Aux figures 2a et 2b, le corps central de la chambre de formage 15 est constitué d'une série d'entretoises non représentées et de tôles minces 16 en alliage d'acier retenues entre deux pièces de tête et délimitant 5 compartiments 17 de formage des couches (on a fait figurer un compartiment et le compartiment voisin avec une partie seulement de la paroi de séparation entre les deux compartiments par souci de clarté).

Deux soutènements 18 fixent le groupe de formage à la structure de la machine et dirigent le produit qui arrive des collecteurs 19 par les canaux d'amenée 20 vers les compartiments de formage 17. Selon une réalisation, le collecteur droit raccorde les trois tuyaux d'arrivée du produit I provenant de l'un des doseurs multiples 7 (représenté à gauche sur la figure 1) ; le collecteur gauche raccorde les deux tuyaux d'arrivée du produit II provenant de l'autre doseur multiple 7 (représenté à droite sur la figure 1). Le dosage des couches est assuré par deux groupes de doseurs multiples à soupapes pilotées non représentés. Les couches sont dosées individuellement dans des compartiments séparés : les couches du produit I par un groupe à 3 éléments et les couches du produit II par un groupe à 2 éléments. On peut fixer au préalable le poids des couches et régler celui-ci en continu pour chaque groupe de doseurs de manière connue en réglant la course des pistons doseurs.

A l'extrémité inférieure du corps central se trouvent deux arbres 21 sur lesquels coulissent deux chariots 22 supportant des éléments 23 constitutifs du fond de la chambre de dosage en forme de marteaux dont l'extrémité effilée 24 est tournée vers le bas. Ceux-ci, en coulissant latéralement entre les parois de séparation 16, ouvrent et ferment la chambre de formage à son extrémité inférieure.

Les marteaux 23 sont enfermés dans un carter de protection 25 de forme parallélépipèdique dont deux parois ont une légère dépouille. Ce carter prolonge la chambre de formage et ses compartiments et constitue un bec de coulée des pâtes qui est adapté pour entrer dans la coquille. 5 expulseurs 26 par exemple en matériau plastique résistant à l'usure sont ajustés pour glisser dans les compartiments de la chambre de formage de manière à pousser les couches hors de la chambre de formage et à les déposer au fond de la coquille.

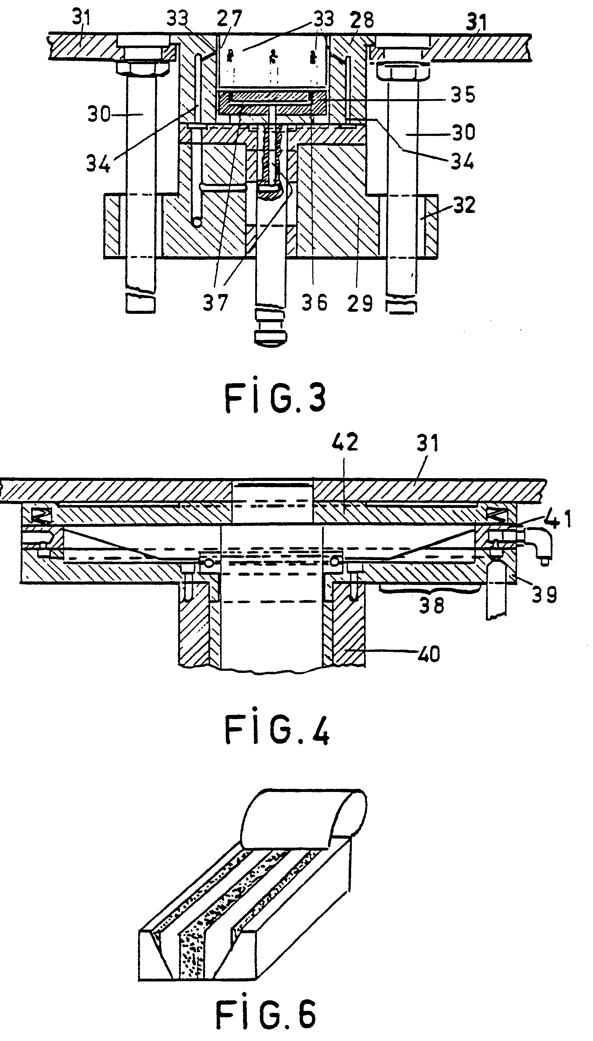

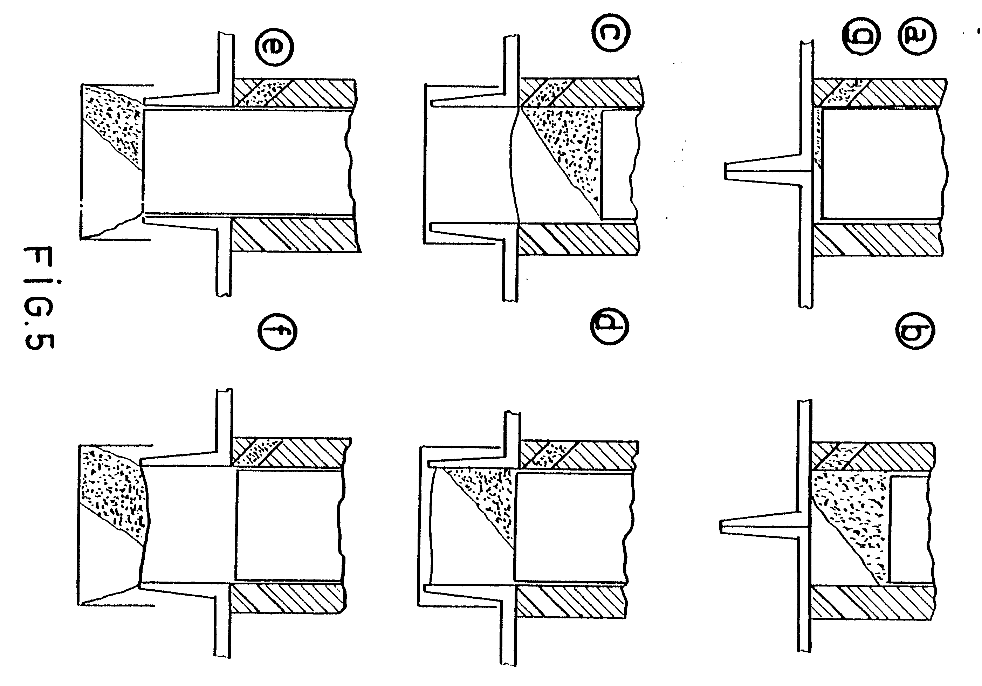

A la figure 3 la coquille 27 est placée dans un alvéole 28 qui a pour fonctions : de recevoir la coquille provenant de la station d'emboutissage, de la transférer sous la station de formage, de la lever jusqu'au bec de coulée, de l'abaisser en même temps que les couches sont expulsées des compartiments de formage et d'évacuer la portion emballée. L'alvéole 28 par exemple en aluminium spécial est supporté par un chariot 29 coulissant sur deux arbres verticaux 30 solidaires d'une table tournante 31 au moyen de roulements axiaux 32. Des orifices 33 sont répartis sur les parois latérales de l'alvéole 28. Ces orifices sont reliés par des canaux 34 à un système de distribution du vide et leur fonction est de maintenir les côtés de la coquille contre les parois en regard de l'alvéole, en particulier pour faciliter l'introduction du bec de coulée du dispositif de formage à l'intérieur de la coquille. Le fond de l'alvéole est constitué par un poinçon mobile 35 qui permet de positionner la coquille en hauteur sous le poste de repliage (figure 1, chiffre 12) et d'expulser la portion emballée après la fixation des bords (figure 1, chiffres 13 et 14). Des orifices 36 sont ménagés dans le poinçon 35 et reliés par des canaux 37 au système de distribution du vide mentionné ci-dessus. Leur fonction est d'empêcher que la coquille soit entraînée vers le haut, après remplissage, par l'appel d'air provoqué par le retour des expulseurs comme cela sera décrit plus en détail ci-dessous.

Les canaux d'aspiration du vide 34, 37 sont reliés à une came de distribution du vide 38 montée sur la table tournante 31 représentée à la figure 4 qui a pour fonction d'ouvrir et de fermer les liaisons avec le vide pendant le cycle de travail. La came 38 comprend deux parties dont l'une 39, fixe, est reliée au support central 40 de la table tournante et dont l'autre 41, mobile, est solidaire du support 42 de la table tournante 31.

Le schéma de la figure 5 illustre le formage et l'expulsion de deux couches voisines de la portion en omettant, pour la clarté de l'exposé, de faire figurer une partie de la paroi de séparation entre les deux couches.

En A, les marteaux sont fermés, les expulseurs sont figurés à une position intermédiaire et le produit est en train d'être dosé.

En B, les expulseurs montent pour laisser la place aux produits qui remplissent les compartiments de formage.

En C, la coquille est soulevée jusqu'au carter constituant l'extrémité du bec de coulée non représenté et, simultanément, les marteaux coulissent en ouvrant le fond des compartiments.

En D, les couches sont expulsées poussées par les expulseurs jusqu'au fond de la coquille.

En E, la coquille descend en même temps que les expulseurs qui complètent leur course jusqu'à l'extrémité des marteaux.

En F, les expulseurs remontent au-dessus des marteaux et en G les marteaux se referment en expulsant pratiquement tous les résidus de pâte de la chambre de formage. Leur extrémité effilée favorise le décollement du produit pendant que la coquille retombe au niveau de la table qui tourne de manière à amener l'alvéole au poste suivant et le cycle recommence de la position A.

On voit que dans les phases D, E et F le produit est guidé par les marteaux jusqu'au fond de la coquille cependant qu'en E l'ensemble des couches est déposé sans à-coup dans celle-ci. Il est certain que ce qui importe pour éviter la déformation des couches formées c'est la progressivité des déplacements relatifs de la coquille et des expulseurs. On pourrait donc en variante prévoir de maintenir la coquille fixe à la position qu'elle occupe en D et remonter la chambre de formage pendant que les expulseurs descendent. Ceci est cependant moins avantageux à cause des plus grandes sollicitations mécaniques.

On constate également qu'il est important que les bords de la coquille restent plaqués sur ceux de l'alvéole par l'action du vide pendant les phases C à F cependant que dans la phase F le fond de la coquille doit être maintenu sur le poinçon également par l'action du vide pour éviter l'aspiration de la portion vers le haut lorsque les expulseurs remontent.

A la figure 6 la portion emballée laisse apparaître les différentes couches. La portion représentée a la forme d'un parallélépipède rectangle. Il est certain qu'elle pourrait affecter par exemple la forme d'un parallélépipède à base carrée, d'un cube, d'un prisme droit à base polygonale, etc... De même, on a représenté des couches de même forme que la portion : celles-ci pourraient sans difficulté être de forme et de nombre différents et également différentes entre elles moyennant une adaptation de la géométrie des compartiments de formage, des expulseurs, du bec de coulée et de la coquille et un réglage de la quantité de produit à doser dans les compartiments.

Les constituants de deux couches voisines de la portion seront de préférence bien contrastés du point de vue de leur couleur, de leur goût et de leur consistance pourvu que les pâtes soient compatibles entre elles de manière à éviter les migrations de leurs constituants au stockage dues par exemple à une différence de pression osmotique. De même un comportement rhéologique voisin évitera des difficultés de dosage et de remplissage.

Les pâtes fromagères pourront contenir des additifs comme des colorants, des petites particules par exemple d'épices ou d'aromates ou encore des éléments figurés tels que des morceaux de fruits par exemple de noix, noisettes, raisins etc... On peut citer l'association d'une pâte fromagère à goût corsé avec une pâte douce comme par exemple : caillé acide riche en matières grasses — caillé acide riche en matières grasses aromatisé aux fines herbes et au poivre : cheddar affiné, beurre et poivre — fontal et beurre ; provolone affiné et cheddar — fontal et beurre ; emmenthal affiné et beurre — caillé acide riche en matières grasses et crème ; caillé acide riche en matières grasses, mascarpone — roquefort, gorgonzola, etc...

Bien que l'installation soit spécialement adaptée au dosage et au formage des pâtes de fromage, on peut bien entendu l'utiliser pour fabriquer des portions d'autres produits alimentaires pâteux et collants tels que des pâtes de fruits, de chocolat, des masses de confiserie, des pâtes de céréales, des purées, etc... éventuellement en association avec des pâtes fromagères compatibles. Les différents mécanismes de l'installation sont commandés de manière connue et non représentée à partir d'un arbre principal actionné par un moteur hydraulique ou par un motoréducteur électrique. L'arbre principal entraîne un arbre secondaire portant des cames et excentriques guidés auxquels sont associés des leviers actionnant en synchronisme les éléments mobiles des différents postes tels que pistons de dosage, marteaux, expulseurs, alvéoles, poinçons, etc... On peut également prévoir de commander les différents éléments par des moyens pneumatiques. Dans la forme d'exécution comportant une table tournante, celle-ci peut être actionnée pas à pas par un mécanisme connu dénommé « croix de malte ».

**Revendications**

1. Installation de fabrication de portions alimentaires multicouches de produits pâteux de nature différente se présentant en couches alternées, comprenant essentiellement un poste de formage constitué d'une chambre de formage (15) comprenant plusieurs compartiments séparés par des parois (16) et d'éléments (26) d'expulsion simultanée des différentes couches constituant la portion, chaque élément (26) d'expulsion coulissant entre les parois d'un compartiment s'appliquant individuellement sur la couche qui lui correspond pour l'expulser de la chambre de formage par un bec (25) prolongeant celle-ci vers le bas de manière à placer cette couche avec les autres déplacées simultanément dans une coquille préformée disposée dessous et destinée à recevoir la portion ainsi formée, caractérisée par le fait que le fond de la chambre de formage est constitué de deux groupes en vis-à-vis d'éléments (23) en forme de marteaux, dont l'extrémité effilée (24) s'étend vers le bas jusqu'aux environs de l'extrémité inférieure du bec de coulée (25), chaque groupe d'éléments pouvant coulisser latéralement en sens opposé à l'autre groupe de façon à ouvrir ou fermer le fond de la chambre de formage à sa jonction avec le bec de coulée (25), chaque élément-marteau (23) coulissant entre les parois (16) d'un compartiment, qui se prolongent dans le bec de coulée, que des moyens (28, 35) sont prévus pour déplacer relativement entre eux la coquille préformée (27) et la chambre de formage avec le bec (25) verticalement entre une position où le fond de la coquille est légèrement en dessous de l'extrémité du bec et une autre position où la coquille peut être dégagée du bec et évacuée latéralement, et que l'extrémité inférieure des éléments (26) d'expulsion est sensiblement au niveau de l'extrémité inférieure du bec de coulée, à la fin du mouvement d'expulsion.

2. Installation selon la revendication 1, caractérisée par le fait qu'elle comporte en plus du poste de formage, des postes d'application d'un tirecel pour ouverture rapide et d'emboutissage d'une coquille en amont du poste de formage et en aval de celui-ci des postes d'application d'un couvercle, de repliage des bords, de fixation des bords et d'évacuation de la portion emballée.

3. Procédé de fabrication de portions alimentaires multi-couches de produits pâteux de nature différente, caractérisé par les étapes suivantes effectuées avec l'installation selon la revendication 1 : on place le fond de la coquille (27) légèrement au-dessous de l'extrémité du bec (25) et on ouvre le fond amovible de la chambre de formage en faisant coulisser latéralement les deux ensembles d'éléments (23) qui le constituent, on expulse les couches de pâte formées en faisant descendre progressivement et simultanément les éléments d'expulsion (26) jusqu'à ce que leur extrémité inférieure soit sensiblement au niveau de l'extrémité inférieure du bec tandis que de manière concomitante la coquille descend ou que la chambre de formage remonte, la coquille demeurant fixée dans ce dernier cas, de manière que, dans l'un ou l'autre cas, le bord supérieur de la coquille soit légèrement au-dessus de l'extrémité du bec, on fait remonter les éléments d'expulsion (26) jusqu'à ce que leur extrémité inférieure soit légèrement au-dessus des éléments constitutifs du fond de la chambre de formage cependant qu'on maintient la coquille fixe, on referme les éléments constitutifs du fond de la chambre de formage ce qui expulse pratiquement les résidus de pâte et on fait remonter les éléments d'expulsion de manière à remplir la chambre de formage de nouvelles doses de produit correspondant à la portion suivante cependant qu'on fait descendre la coquille remplie jusqu'à un niveau où elle est évacuée vers un poste de traitement ultérieur.

4. Procédé selon la revendication 3, caractérisé par le fait que la coquille est portée par un alvéole et maintenue contre les côtés et le fond de celui-ci au moyen d'orifices ménagés dans l'alvéole et reliés au vide.

**Claims**

1. An installation for the production of multilayer portions of spreadable food products of different kinds in the form of alternate layers, essentially comprising a shaping station consisting of a shaping chamber (15) comprising several compartments separated by walls (16) and of elements (26) for the simultaneous ejection of the various layers making up the portion, each ejection element (26) sliding between the walls of a compartment being individually applied to the layer corresponding to it to eject it from the shaping chamber through a nozzle (25) which extends the shaping chamber downwards to place this layer with the others simultaneously displaced in a preshaped shell arranged below and intended to receive the portion thus formed, characterized in that the bottom of the shaping chamber consists of two mutually opposite groups of hammer-shaped elements (23) of which the tapered end (24) extends downwards to near the lower end of the pouring nozzle (25), each group of elements being designed to slide laterally in the opposite direction to the other group to open or close the bottom of the shaping chamber at its junction with the pouring nozzle (25), each hammer element (23) sliding between the walls (16) of a compartment which extend into the pouring nozzle, means (28, 35) are provided for vertically displacing — relatively between them — the pre-shaped shell (27) and the shaping chamber with the nozzle (25) between a position where the bottom of the shell is slightly below the end of the nozzle and another position where the shell may be separated from the nozzle and laterally removed, and the lower end of the ejection elements (26) is substantially level with the lower end of the pouring nozzle at the end of the ejection movement.

2. An installation as claimed in Claim 1, characterized in that, in addition to the shaping station, it comprises stations for applying a tear strip for easy opening and for stamping a shell upstream of the shaping station and, downstream thereof, posts for fitting a lid, folding back the edges, fixing the edges and removing the packaged portion.

3. A process for the production of multilayer portions of spreadable food products of different kinds, characterized by the following steps carried out with the installation claimed in Claim 1 : the bottom of the shell (27) is positioned slightly below the end of the nozzle (25) and the detachable bottom of the shaping chamber is opened by causing the two groups of elements (23) forming it to slide sideways, the shaped layers of spread are ejected by causing the ejection elements (26) to descend progressively and simultaneously until their lower end is substantially level with the lower end of the nozzle while at the same time the shell descends or the shaping chamber ascends, the shell remaining fixed in the latter case so that, in one case or the other, the upper edge of the shell is slightly above the end of the nozzle, the ejection elements (26) are caused to ascend until their lower end is slightly above the elements forming the bottom of the shaping chamber while the shell is kept fixed, the elements forming the bottom of the shaping chamber are reclosed, substantially ejecting the remains of the spread, and the ejection elements are caused to ascend to refill the shaping chamber with fresh measured amounts of product corresponding to the following portion while the filled shell is caused to descend to a level where it is removed towards a further treatment station.

4. A process as claimed in Claim 3, characterized in that the shell is carried by a cavity and held against the sides and the bottom thereof by means of openings formed in the cavity and communicating with a vacuum source.

**Patentansprüche**

1. Vorrichtung zur Herstellung von Lebensmittelportionen mit mehreren Lagen aus pastösen Produkten verschiedener Art, die in abwechselnden Lagen auftreten, im wesentlichen mit einer Formstelle, die aus einem Formraum (15), der mehrere, durch Seitenwände (16) getrennte Fächer aufweist, und aus Elementen (26) zum gleichzeitigen Ausstoß von verschiedenen, die Portion bildenden Lagen besteht, wobei jedes Ausstoßelement (26), das zwischen den Seitenwänden eines Faches verschiebbar ist, einzeln an der ihm entsprechenden Lage angreift, um sie aus dem Formraum durch einen Schnabel (25) auszustoßen, der diesen nach unten verlängert, um diese Lage mit den anderen, die gleichzeitig verschoben werden, in eine vorgeformte Schale einzubringen, die darunter angeordnet und dafür bestimmt ist, die so geformte Portion aufzunehmen, dadurch gekennzeichnet, daß der Boden des Formraumes aus zwei Gruppen von sich gegenüberliegenden Elementen (23) in Form von Hämmern besteht, deren sich verjüngende Enden (24) sich nach unten bis in die Nähe des unteren Endes des Gießschnabels (25) erstreckt, wobei jede Gruppe von Elementen seitwärts im entgegengesetzten Sinn zu der anderen Gruppe verschiebbar ist, so daß sich der Boden des Formraumes an seiner Einmündung in den Gießschnabel (25) öffnet oder schließt, wobei jedes Hammerelement (23) zwischen den Seitenwänden (16) eines Faches verschiebbar ist, das sich in den Gießschnabel ausdehnt, daß Mittel (28, 35) vorgesehen sind, um relativ zueinander die vorgeformte Schale (27) und den Formraum mit dem Schnabel (25) vertikal zwischen einer Position, wo der Boden der Schale geringfügig unterhalb des Endes des Schnabels ist, und einer anderen Position, wo die Schale von dem Schnabel lösbar und seitwärts abführbar ist, zu verschieben, und daß das untere Ende der Ausstoßelemente (26) genau auf der Höhe des unteren Endes des Gießschnabels am Ende der Ausstoßbewegung ist.

2. Vorrichtung nach Anspruch 1, dadurch gekennzeichnet, daß sie zusätzlich zu der Formstelle Stellen zum Anbringen eines Reißstreifens zum leichten Öffnen und zum Tiefziehen einer Schale oberhalb der Formstelle und unterhalb dieser Stellen zum Anbringen eines Deckels, zum Umklappen der Ränder zur Befestigung der Ränder und zum Abführen der verpackten Portion aufweist.

3. Verfahren zur Herstellung von Lebensmittelportionen mit mehreren Lagen aus pastösen Produkten verschiedener Art, gekennzeichnet durch die folgenden, mit der Vorrichtung gemäß Anspruch 1 durchgeführten Schritte : Man ordnet den Boden der Schale (27) geringfügig unterhalb des Endes des Schnabels (25) an und öffnet den beweglichen Boden des Formraumes, indem die beiden Gruppen von Elementen (23), die ihn bilden, seitwärts verschoben werden, man stößt die geformten Lagen der Paste aus, indem die Ausstoßelemente (26) fortschreitend und gleichzeitig abgesenkt werden, bis ihr unteres Ende genau auf der Höhe des unteren Endes des Schnabels ist, während gleichzeitig die Schale sich absenkt oder der Formraum wieder steigt, wobei im letzteren Fall die Schale fest zurückbleibt, so daß in dem einen oder anderen Fall der obere Rand der Schale geringfügig oberhalb des Endes des Schnabels ist, man läßt die Ausstoßelemente (26) wieder steigen bis ihr unteres Ende geringfügig über den den Boden des Formraumes bildenden Elementen ist, während man die Schale festhält, man schließt die den Boden des Formraumes bildenden Elemente wieder, was die Reste der Paste praktisch ausstößt und man läßt die Ausstoßelemente wieder steigen, um den Formraum wieder mit neuen Produktmengen zu füllen, welche der folgenden Portion entsprechen, während man die gefüllte Schale bis auf eine Höhe absenkt, auf der sie zu einer weiteren Behandlungsstelle abgeführt wird.

4. Verfahren nach Anspruch 3, dadurch gekennzeichnet, daß die Schale von einer Zelle getragen und gegen ihre Seiten und ihren Boden mittels Öffnungen gehalten wird, die in der Zelle angeordnet und mit dem Vakuum verbunden sind.

FİG.1

0 128 963

FiG.2a

FiG.2b

FIG.3

FIG.4

FIG.6

FIG.5